# EUROPÄISCHE PATENTSCHRIFT

(11) **EP 3 027 924 B1**
(45) Veröffentlichungstag und Bekanntmachung des Hinweises auf die Patenterteilung: **21.06.2017**
(21) Anmeldenummer: 14758080.7
(22) Anmeldetag: 23.07.2014
(51) Int. Cl.: F16D 41/16, B60H 1/00, B60H 1/32, F02N 15/00, F02B 67/06

(54) **FAHRZEUG MIT RIEMENSCHEIBE UND STANDKLIMATISIERUNG**
VEHICLE HAVING A BELT PULLEY AND STANDSTILL AIR CONDITIONING
VÉHICULE ÉQUIPÉ D'UNE POULIE À COURROIE ET D'UNE CLIMATISATION À L'ARRÊT

(30) Priorität: 31.07.2013 DE 102013214970; 24.10.2013 DE 102013221646
(43) Veröffentlichungstag der Anmeldung: 08.06.2016
(73) Patentinhaber: Schaeffler Technologies AG & Co. KG, 91074 Herzogenaurach (DE)
(72) Erfinder: WINKLER, Thomas, 77654 Offenburg (DE); GÖCKLER, Mathias, Ottersweier Ottersweier (DE); KROLL, Jürgen, 77815 Bühl (DE)
(86) Internationale Anmeldenummer: PCT/DE2014/200341
(87) Internationale Veröffentlichungsnummer: WO 2015/014361

(56) Entgegenhaltungen:
- EP-A1- 1 873 416
- WO-A1-2012/079796
- DE-A1- 19 822 615
- DE-A1-102008 051 709
- DE-A1-102009 048 297
- DE-A1-102010 025 225
- DE-A1-102012 208 318

## Beschreibung

Die Erfindung betrifft Fahrzeuge mit Riemenstartergenerator (RSG) und abkoppelbarem Nebenabtrieb, insbesondere eine Strategie für den Wiederstart aus dem Standklimabetrieb in Kombination mit einer schaltbaren Riemenscheibe.

Es sind bereits Fahrzeuge mit Riemenstartergeneratoren bekannt, welche sich auszeichnen durch:
a) Starre Riemenscheiben mit Torsionsschwingungsdämpfer (TSD)
b) Riemenscheibenentkoppler (RSE) mit Torsionsschwingungsdämpfer
c) Reibschlüssige Magnetkupplungen für Nebenaggregate

Nur bei der Variante c) ist der Betriebspunkt einer Kurbelwellentrennung darstellbar. Aus Bauraumgründen ist jedoch keine Kombination mit einem Riemenscheibenentkoppler möglich. Mittels einer reibschlüssigen Kupplung erfolgt unmittelbarer der Start des Verbrennungsmotors aus der Standklimatisierung als sogenannter Impulsstart heraus.

Nachteilig bei den bekannten Lösungen ist, dass keine Stand- oder Stoppklimatisierung darstellbar ist, da der Riementrieb nicht mechanisch von der Kurbelwelle getrennt werden kann. Ein Anstieg der Innenraumtemperatur bei Start/Stopp Vorgängen bzw. ein CO2-Nachteil aufgrund eines frühen Wiederstarts des Verbrennungsmotors. Falls Magnetkupplungen eingesetzt werden, ist keine Kombination mit einem RSE möglich.

Bei Fahrzeugen mit Riemenstartergenerator (RSG) und abkoppelbarem Nebenabtrieb kann bei stehendem Motor der Riementrieb über eine Elektromaschine (E-Maschine) elektrisch betrieben werden, um beispielsweise eine Klimatisierung bei ausgeschaltetem und stehendem Motor zu realisieren. Dieser Betriebspunkt findet beispielsweise in Stopphasen an der Ampel oder im Segelbetrieb statt. Ein schneller Wiederstart des Verbrennungsmotors aus diesem Betriebszustand ist zwingend erforderlich.

Reibschlüssige arbeitende Kupplungen (bspw. Magnetkupplungen) erfüllen grundsätzlich diese Anforderung, da die vorhandenen Drehzahldifferenz über Schlupf ausgeglichen wird und somit der Verbrennungsmotor unmittelbar gestartet werden kann (Impulsstart). Diese Kupplungen können aber aus Bauraumgründen nicht mit einem Riemenscheibenentkoppler (RSE) kombiniert werden.

Aus der deutschen Offenlegungsschrift DE 10 2011 081 121 A1 ist eine Riemenscheibenanordnung mit einem Rampensystem bekannt, durch das eine Riemenscheibe von einer Antriebswelle abgekuppelt werden kann, wenn die Antriebswelle still steht und beispielsweise ein mit der Riemenscheibe zusammenwirkendes Zugmittel entgegen der Antriebsrichtung, insbesondere mit Hilfe einer elektrischen Maschine, beispielsweise einem Startergenerator, angetrieben wird. Aus der deutschen Offenlegungsschrift DE 10 2012 208 318 A1 ist ein Riementrieb mit einer Kurbelwellenriemenscheibe und einem Startergenerator bekannt, wobei ein Standklima-Betrieb durch Rückwärtsdrehen des Startergenerators ermöglicht wird, wobei bei stehender oder langsam drehender Kurbelwelle, zum Beispiel im Standklima- und Start-Betrieb, eine Fliehkraftkupplung offen ist und kein Drehmoment überträgt. Weiterhin wird aus der WO 2012/079796 ein Fahrzeug mit einem Verbrennungsmotor, einem Riemenstartergenerator, und abkoppelbarem Nebenabtrieb für Nebenaggregate nach dem Oberbegriff des Anspruchs 1 offenbart. Die Aufgabe besteht darin eine Lösung bereitzustellen, die eine intelligente Applikationsstrategie auf Gesamtsystemebene mit dem schaltbaren Riemenscheibenentkoppler (RSES) kombiniert, um einen schnellen Wiederstart aus der Standklimatisierung zu ermöglichen, ohne ein reibschlüssiges Kupplungskonzept verwenden zu müssen. Der RSES besteht aus einem konventionellen Riemenscheibenentkoppler (RSE) mit einem zusätzlichen Formschlusselement zur Trennung der Kurbelwelle von der Riemenscheibe.

Durch die Erfindung wird ein möglichst komfortabler und schneller Wiederstart des Verbrennungsmotors bei drehenden Nebenaggregaten realisiert. Die Nebenaggregate lassen sich beim Wiederstart durch zwei prinzipielle Konzepte an den Verbrennungsmotor ankoppeln, entweder durch eine reibschlüssige oder durch eine formschlüssige Verbindung. Bei einem reibschlüssigen Konzept können die Nebenaggregate auch bei einer gewissen Drehzahldifferenz zwischen Nebenabtrieb und Verbrennungsmotor angekoppelt werden. Bei einem formschlüssigen Konzept dürfen nur geringe Drehzahldifferenzen zwischen Nebenabtrieb und Verbrennungsmotor bestehen, um beide wieder zu koppeln, da sonst zu hohe Kräfte auftreten. Daraus folgt, dass bei einem formschlüssigen Konzept (z.B. RSES) zuerst die Nebenaggregate abgebremst werden müssen, bevor sie wieder an den Verbrennungsmotor angekoppelt werden können. Das Abbremsen der Nebenaggregate erfordert eine gewisse Zeit, die durch zusätzliches Generieren der E-Maschine verkürzt werden kann. Da die E-Maschine bei niedrigen Drehzahlen allerdings kaum Moment im Generatormodus aufbringen kann, ist die Zeit zum Abbremsen der Nebenaggregate verhältnismäßig lang.

Ein E-Motor besitzt die Eigenschaft, dass bei Drehzahl 0 kein Generatormoment aufgebracht werden kann. Allerdings besitzt die E-Maschine bei Drehzahl 0 das größte motorische Moment. Dies kann man sich für einen schnellen Wiederstart zu Nutze machen, indem man die Nebenaggregate bzw. die E-Maschine im Standklimabetrieb in die entgegengesetzte Richtung des normalen Betriebs bzw. in die entgegengesetzte Richtung der Verbrennungsmotordrehrichtung betreibt. Dies hat mehrere Vorteile zum einem muss die E-Maschine nur einmal nach der Anforderung "Wiederstart" umgepolt werden und danach einfach motorisch betrieben werden, zum anderen hat die E-Maschine im motorischen Betrieb das größte Moment im Nulldurchgang der Drehzahl. Dadurch ist der steuerungstechnische Aufwand gering und die Zeit zum Abbremsen der Nebenaggregate wird minimiert. Zudem entstehen keine impulsartigen hohen Momente, die z.B. die Lebensdauer der Riemenscheibe beeinträchtigen könnte.

Durch das Rückwärtsdrehen der Nebenaggregate im Betriebspunkt Standklima, kann der Wiederstart des stehenden Verbrennungsmotors in Kombination mit formschlüssigen Trennkonzepten hinsichtlich Komfort und Zeit optimiert werden.

Ein bevorzugtes Ausführungsbeispiel des Fahrzeugs ist dadurch gekennzeichnet, dass der umschaltbare Klinkenfreilauf eine Umschalteinrichtung und mindestens eine Generatorklinke umfasst, die durch die Umschalteinrichtung aus einer Sperrstellung in eine Freilaufstellung umschaltbar ist. Bei der Umschalteinrichtung handelt es sich zum Beispiel um einen Umschaltkäfig. Der Klinkenfreilauf umfasst vorzugsweise einen Innenring und einen Außenring. Die Generatorklinke ermöglicht in ihrer Sperrstellung durch Formschluss eine drehfeste Verbindung zwischen dem Innenring und dem Außenring.

Ein weiteres bevorzugtes Ausführungsbeispiel des Fahrzeugs ist dadurch gekennzeichnet, dass der umschaltbare Klinkenfreilauf eine Boostklinke umfasst, die in einer gegenüber der Generatorklinke entgegengesetzten Relativverdrehrichtung sperrt. Die Boostklinke ermöglicht also eine Drehmomentübertragung in der entgegengesetzten Relativverdrehrichtung zu der Generatorklinke. Ein Umschalten der Boostklinke erfolgt vorzugsweise mit der gleichen Umschalteinrichtung, mit der auch das Umschalten der Generatorklinke bewirkt wird.

Ein weiteres bevorzugtes Ausführungsbeispiel des Fahrzeugs ist dadurch gekennzeichnet, dass der Riemenstartergenerator mit einem Riemenscheibenentkoppler kombiniert ist. Der Riemenscheibenentkoppler verhindert, dass unerwünschte Drehschwingungen oder Drehmomentstöße in den Riementrieb eingeleitet werden.

Ein weiteres bevorzugtes Ausführungsbeispiel des Fahrzeugs ist dadurch gekennzeichnet, dass der Riemenscheibenentkoppler einen Torsionsschwingungsdämpfer und/oder Drehschwingungsdämpfer umfasst. Der Torsionsschwingungsdämpfer ist vorzugsweise als Bogenfederdämpfer ausgeführt.

Bei einem Verfahren zum Betreiben eines Fahrzeugs mit einem Verbrennungsmotor, einem Riemenstartergenerator und abkoppelbarem Nebentrieb für Nebenaggregate, wobei im Nebentrieb als Nebenaggregate mindestens ein Klimakompressor und eine als Motor und Generator nutzbare Elektromaschine als Riemenstartergenerator vorgesehen sind, insbesondere eines vorab beschriebenen Fahrzeugs, ist die oben angegebene Aufgabe alternativ oder zusätzlich dadurch gelöst, dass die Ab- und Ankopplung des Nebenabtriebs mittels einer formflüssigen Kupplung erfolgt und dass im Stillstand des Verbrennungsmotors in kurzen Stoppphasen eine Standklimatisierung mittels Rückwärtsdrehen der Nebenaggregate erfolgt und das Starten des Verbrennungsmotors nach der Stoppphase mittels Umkehr der Drehrichtung der Elektromaschine erfolgt.

Ein bevorzugtes Ausführungsbeispiel des Verfahrens ist dadurch gekennzeichnet, dass eine beziehungsweise die Boostklinke in einem Standklimabetrieb freilaufmäßig überrollt wird. Die Boostklinke ermöglicht eine zusätzliche Boostfunktion.

Ein weiteres bevorzugtes Ausführungsbeispiel des Verfahrens ist dadurch gekennzeichnet, dass die als Riemenstartergenerator nutzbare Elektromaschine umgepolt wird, wenn nach der Stoppphase das Starten des Verbrennungsmotors angefordert wird. Durch das Umpolen der Elektromaschine kann in Kombination mit dem Rückwärtsdrehen der Nebenaggregate ein besonders weiches Ansprechverhalten beim Starten des Verbrennungsmotors erreicht werden. Darüber hinaus kann die zum Starten des Verbrennungsmotors benötigte Zeit verkürzt werden.

Ein weiteres bevorzugtes Ausführungsbeispiel des Verfahrens ist dadurch gekennzeichnet, dass eine beziehungsweise die Generatorklinke nach dem Starten des Verbrennungsmotors in ihre Sperrstellung umgeschaltet wird. Im Normalbetrieb befindet sich die Generatorklinke in ihrer Sperrstellung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 ein kartesisches Koordinatendiagramm, in welchem eine Drehzahl über einer Zeit aufgetragen ist, um die Unterschiede zwischen einem herkömmlichen Standklimabetrieb und einem erfindungsgemäßen Standklimabetrieb zu verdeutlichen;
Figur 2 drei kartesische Koordinatendiagramme, in welchem ein herkömmlicher Startvorgang aus einem Standklimabetrieb dargestellt ist;
Figur 3 die gleichen Koordinatendiagramme wie in Figur 2, in welchen ein erfindungsgemäßer Startvorgang aus einem Standklimabetrieb dargestellt ist;
Figur 4a ein vereinfachtes Ersatzschaubild eines erfindungsgemäßen Fahrzeugs;
Figur 4b zwei Rechtecke, in welchen ein Freilauf in einem Normalbetrieb und in einem Standklimabetrieb dargestellt ist und
Figur 5 zwei kartesische Koordinatendiagramme, in welchen eine Drehzahl und eine Klinkenposition über der Zeit aufgetragen sind.

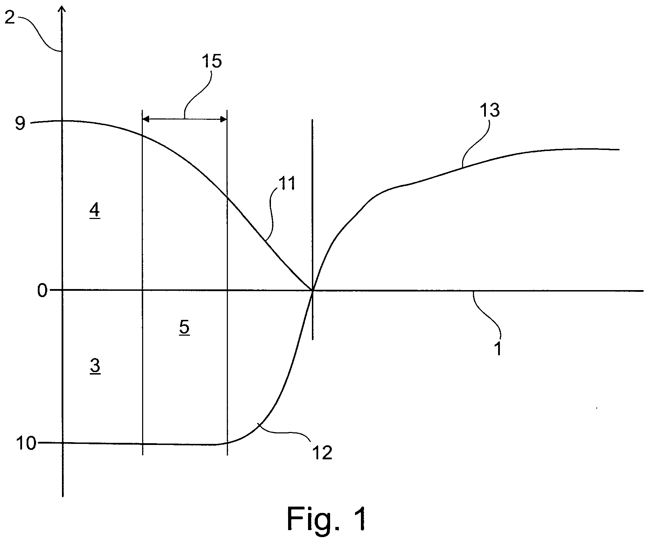

Figur 1 zeigt ein kartesisches Koordinatendiagramm mit einer x-Achse 1 und einer y-Achse 2. Auf der x-Achse ist eine Zeit in Sekunden aufgetragen. Auf der y-Achse 2 ist eine Drehzahl in einer geeigneten Einheit aufgetragen. Ein Bereich 3 unterhalb der x-Achse 1 stellt einen erfindungsgemäßen Standklimabetrieb dar. Ein Bereich 4 oberhalb der x-Achse 1 stellt einen herkömmlichen Standklimabetrieb dar. Ein Bereich 5 stellt eine Motorstoppphase dar.

Ein Kurvenabschnitt 11 stellt ein herkömmliches Abbremsen durch einen Generatorbetrieb dar. Ein Kurvenabschnitt 12 stellt ein Rückwärtsdrehen der Nebenaggregate im erfindungsgemäßen Standklimabetrieb 3 dar. Der Kurvenabschnitt 11 startet bei einer positiven Drehzahl 9. Bei der positiven Drehzahl kann es sich um eine Leerlaufdrehzahl des Verbrennungsmotors handeln.

Der Kurvenabschnitt 12 startet bei einer negativen Drehzahl 10. Bei der negativen Drehzahl 10 kann es sich um die negative Leerlaufdrehzahl handeln. Ein Kurvenabschnitt 13 stellt die Motordrehzahl des Verbrennungsmotors dar. Durch einen Doppelpfeil 15 ist die Zeitersparnis durch das erfindungsgemäße Rückwärtsdrehen der Nebenaggregate im Standklimabetrieb 3 angedeutet.

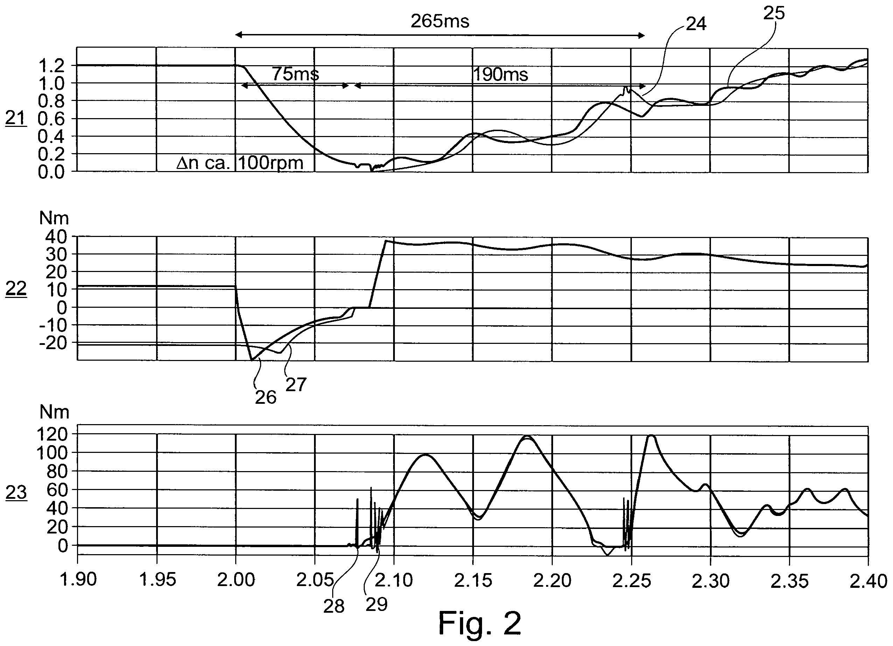

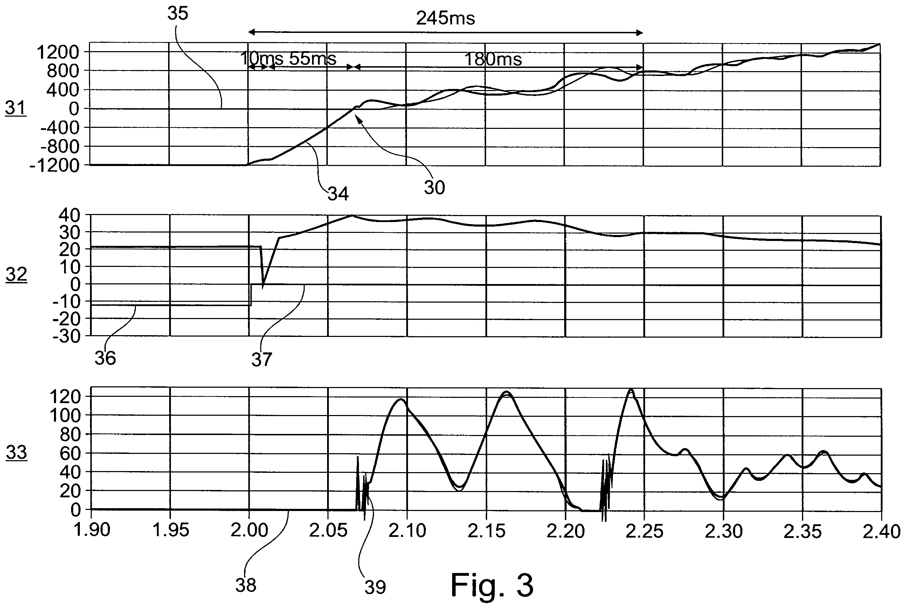

In den Figuren 2 und 3 sind jeweils drei kartesische Koordinatendiagramme 21, 22, 23; 31, 32, 33 übereinander dargestellt. Auf der x-Achse der Koordinatendiagramme ist jeweils eine Zeit in Sekunden aufgetragen. Auf der y-Achse der Diagramme 21; 31 ist jeweils eine Drehzahl in einer geeigneten Drehzahleinheit, zum Beispiel mal eintausend Umdrehungen pro Minute, aufgetragen. Eine Kurve 24; 34 zeigt den Verlauf einer Drehzahl einer Kurbelwellenriemenscheibe. Eine Kurve 25; 35 zeigt den Verlauf einer Drehzahl eines Verbrennungsmotors.

Auf der y-Achse der kartesischen Koordinatendiagramme 22; 32 ist jeweils ein Moment in Newtonmeter aufgetragen. Eine Kurve 26; 36 zeigt den Verlauf eines Moments eines Riemenstartergenerators. Eine Kurve 27; 37 zeigt den Verlauf eines Moments eines Klimakompressors.

In den kartesischen Koordinatendiagrammen 23; 33 ist auf der y-Achse ein Moment in Newtonmeter aufgetragen. Eine Kurve 28; 38 zeigt einen Verlauf des Moments eines Riemenscheibenentkopplers. Eine Kurve 29; 39 zeigt den Verlauf eines Moments eines Klinkenfreilaufs. In Figur 3 sieht man bei 30, dass durch das Rückwärtsdrehen der Nebenaggregate ein weiches Ansprechverhalten und eine Startzeitverkürzung beim Starten des Verbrennungsmotors erreicht wird.

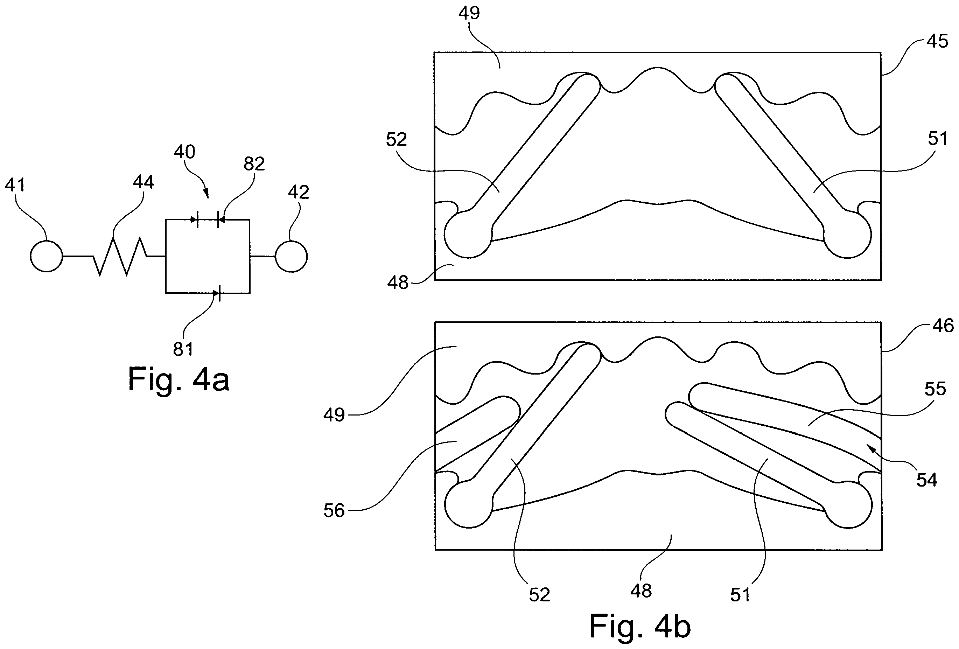

In Figur 4a ist eine erfindungsgemäße Kopplungseinrichtung 40 zwischen einer Kurbelwelle 41 und einer Riemenscheibe 42 stark vereinfacht dargestellt. Die Kopplungseinrichtung 40 umfasst einen Freilauf 81 in Kombination mit einer formschlüssigen Kupplung 82, die vorteilhaft durch in entgegengesetzte Richtungen wirkende Freiläufe dargestellt werden kann.

Ein Riemenscheibenentkoppler 44 ist zwischen die Kurbelwelle 41 und die Kopplungseinrichtung 40 geschaltet. Der Riemenscheibenentkoppler 44 ist zum Beispiel als Bogenfederdämpfer ausgeführt. Die Kopplungseinrichtung 40 dient zur Darstellung eines schaltbaren Formschlusses in Kombination mit einem schaltbaren Freilauf.

In Figur 4b ist in einem Rechteck 45 ein Normalbetrieb eines schaltbaren Klinkenfreilaufs dargestellt. In einem Rechteck 46 ist ein Standklimabetrieb des schaltbaren Klinkenfreilaufs dargestellt. Der schaltbare Klinkenfreilauf umfasst einen Innenring 48, der zum Beispiel drehfest mit einer Kurbelwelle verbindbar ist. Dabei kann ein Riemenscheibenentkoppler zwischen die Kurbelwelle und den Innenring des Klinkenfreilaufs geschaltet sein. Der Innenring 48 des Klinkenfreilaufs ist relativ zu einem Außenring 49 drehbar.

Der Außenring 49 des Klinkenfreilaufs ist zum Beispiel über mindestens eine Riemenspur mit einem Riemen eines Riementriebs drehfest verbunden. Zwischen dem Innenring 48 und dem Außenring 49 des Klinkenfreilaufs sind eine Generatorklinke 51 und eine Boostklinke 52 angeordnet. Die Klinken 51, 52 sind zwischen einer Freilaufstellung und einer Sperrstellung bewegbar beziehungsweise umschaltbar.

Das Umschalten der Klinken 51, 52 erfolgt mit einer Umschalteinrichtung 54. Die Umschalteinrichtung 54 ist zum Beispiel als Umschaltkäfig mit Umschaltfingern 55, 56 ausgeführt. Ein Umschaltfinger 55 in der Umschalteinrichtung 54 ist der Generatorklinker 51 zugeordnet. Ein Umschaltfinger 56 der Umschalteinrichtung 54 ist der Boostklinke 52 zugeordnet.

Im Normalbetrieb 45 befinden sich sowohl die Generatorklinke 51 als auch die Boostklinke 52 in ihrer Sperrstellung. Dadurch wird eine formschlüssige Verbindung zwischen dem Innenring 48 und dem Außenring 49 des Klinkenfreilaufs geschaffen. Im Standklimabetrieb 46 wird die Generatorklinke 51 mit Hilfe der Umschalteinrichtung 54, insbesondere mit Hilfe des Umschaltfingers 55, eingeklappt.

Zur Standklimatisierung bewegt sich der Außenring 49 in dem Rechteck 46 nach rechts. Das entspricht einer Drehrichtungsumkehr im Riementrieb. Die Boostklinke 56 wird freilaufmäßig überrollt, das heißt, es erfolgt keine Drehmomentübertragung über die Boostklinke 52.

Für einen Wiederstart des Verbrennungsmotors wird die Drehrichtung wieder umgekehrt. Zum Wiederstart bewegt sich der Außenring 49 nach links. Die sperrende Boostklinke 52 ermöglicht eine Drehmomentübertragung zwischen dem Außenring 49 und dem Innenring 48. Die Generatorklinke 51 kann mit Hilfe der Umschalteinrichtung 54 später zugeschaltet werden. Die beiden Klinken 51, 52 sind, zum Beispiel durch eine Federeinrichtung, vorzugweise in ihre Sperrstellung, vorgespannt.

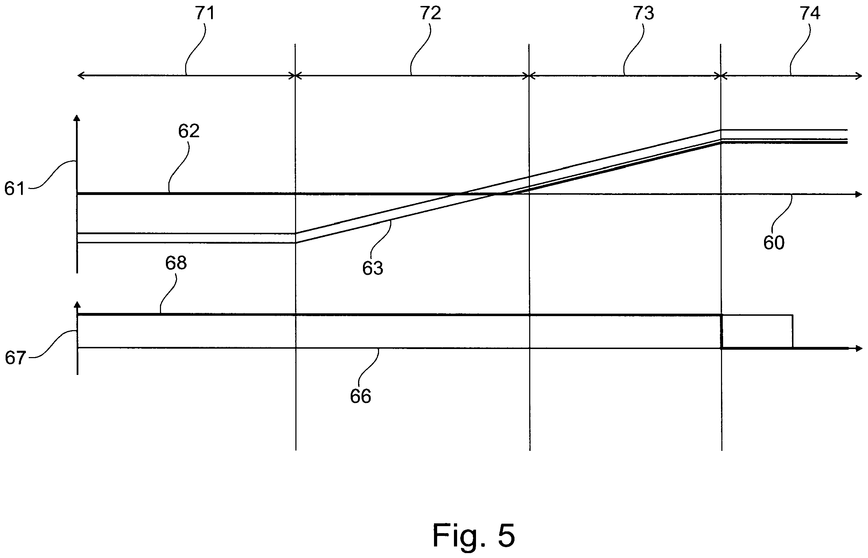

In Figur 5 sind zwei kartesische Koordinatendiagramme übereinander dargestellt. Das obere Koordinatendiagramm umfasst eine x-Achse 60 und eine y-Achse 61. Auf der x-Achse 60 ist eine Zeit in Sekunden aufgetragen. Auf der y-Achse 61 ist eine Drehzahl in Umdrehungen pro Minute aufgetragen. Eine gestrichelte Linie 62 zeigt den Verlauf der Drehzahl der Kurbelwelle. Eine doppelte Linie 63 zeigt den Verlauf der Drehzahl der Riemenscheibe.

Das untere Koordinatendiagramm umfasst eine x-Achse 66 und eine y-Achse 67. Auf der x-Achse 66 ist die Zeit in Sekunden aufgetragen. Auf der y-Achse 67 ist die Position oder Stellung der Generatorklinke (51 in Figur 4b) aufgetragen.

Durch Doppelpfeile 71 bis 74 sind unterschiedliche Zeitabschnitte angedeutet. Der Zeitabschnitt 71 stellt einen Standklimabetrieb dar. Der Zeitabschnitt 72 stellt eine Startvorbereitung dar. Der Zeitabschnitt 73 stellt einen Motorstart, das heißt einen Start des Verbrennungsmotos, dar. Der Zeitabschnitt 74 stellt einen Fahrbetrieb mit dem Verbrennungsmotor dar.

Die Drehzahl 62 der Kurbelwelle ist in den Zeitabschnitten 71 und 72 gleich null, das heißt der Verbrennungsmotor steht still. Die Riemenscheibe dreht sich im Standklimabetrieb 71 rückwärts. Bei der Startvorbereitung 72 wird die Riemenscheibe abgebremst. Beim Motorstart 73 drehen sich die Riemenscheibe und die Kurbelwelle mit der gleichen Drehzahl vorwärts. Die Generatorklinke 68 befindet sich in den Zeitabschnitten 71 bis 73 in ihrer eingeklappten Stellung. Die Generatorklinke kann nach dem Motorstart 73 umgeschaltet werden, oder wie gestrichelt angedeutet ist, etwas später.

### Bezugszeichenliste

- 1: x-Achse
- 2: y-Achse
- 4: Standklimabetrieb
- 5: Motorstoppphase
- 11: Kurvenabschnitt
- 12: Kurvenabschnitt
- 13: Kurvenabschnitt
- 15: Doppelpfeil
- 21: Diagramm
- 22: Diagramm
- 23: Diagramm
- 24: Kurve
- 25: Kurve
- 26: Kurve
- 27: Kurve
- 28: Kurve
- 29: Kurve
- 30: Bereich
- 31: Diagramm
- 32: Diagramm
- 33: Diagramm
- 34: Kurve
- 35: Kurve
- 36: Kurve
- 37: Kurve
- 38: Kurve
- 39: Kurve
- 40: Kopplungseinrichtung
- 41: Kurbelwelle
- 42: Riemenscheibe
- 44: Riemenscheibenentkoppler
- 45: Rechteck
- 46: Rechteck
- 48: Innenring
- 49: Außenring
- 51: Generatorklinke
- 52: Boostklinke
- 54: Umschalteinrichtung
- 55: Umschaltfinger
- 56: Umschaltfinger
- 60: x-Achse
- 61: y-Achse
- 62: gestrichelte Linie
- 63: doppelte Linie
- 66: x-Achse
- 67: y-Achse
- 68: Linie
- 71: Doppelpfeil
- 72: Doppelpfeil
- 73: Doppelpfeil
- 74: Doppelpfeil
- 81: Freilauf
- 82: formschlüssige Kupplung

## Patentansprüche

1. Fahrzeug mit einem Verbrennungsmotor, einem Riemenstartergenerator (RSG) und abkoppelbarem Nebenabtrieb für Nebenaggregate, wobei im Nebenabtrieb als Nebenaggregate mindestens ein Klimakompressor und eine als Motor und Generator nutzbare Elektromaschine als Riemenstartergenerator vorgesehen sind, wobei die Ab- und Ankoppelung des Nebenabtriebs mittels einer Kupplung (82) erfolgt und wobei im Stillstand des Verbrennungsmotors in kurzen Stoppphasen eine Standklimatisierung mittels Rückwärtsdrehen der Nebenaggregate erfolgt und das Starten des Verbrennungsmotors nach der Stoppphase mittels Umkehr der Drehrichtung der Elektromaschine erfolgt, **dadurch gekennzeichnet, dass** die Kupplung (82) eine formschlüssige Kupplung ist.

2. Fahrzeug nach Anspruch 1, **dadurch gekennzeichnet, dass** die Ab- und Ankoppelung des Nebenabtriebs mittels eines umschaltbaren Klinkenfreilaufs (81) erfolgt.

3. Fahrzeug nach Anspruch 2, **dadurch gekennzeichnet, dass** der umschaltbare Klinkenfreilauf (81) eine Umschalteinrichtung (54) und mindesten eine Generatorklinke (51) umfasst, die durch die Umschalteinrichtung (54) aus einer Sperrstellung in eine Freilaufstellung umschaltbar ist.

4. Fahrzeug nach Anspruch 3, **dadurch gekennzeichnet, dass** der umschaltbare Klinkenfreilauf (81) eine Boostklinke (52) umfasst, die in einer gegenüber der Generatorklinke (51) entgegengesetzten Relativverdrehrichtung sperrt.

5. Fahrzeug nach einem der vorhergehenden Ansprüche, **dadurch gekennzeichnet, dass** der Riemenstartergenerator (RSG) mit einem Riemenscheibenentkoppler (44) kombiniert ist.

6. Fahrzeug nach Anspruch 5, **dadurch gekennzeichnet, dass** der Riemenscheibenentkoppler (44) einen Torsionsschwingungsdämpfer und/oder Drehschwingungsdämpfer umfasst.

7. Verfahren zum Betreiben eines Fahrzeugs nach einem der vorhergehenden Ansprüche, **dadurch gekennzeichnet, dass** die die Ab- und Ankoppelung des Nebenabtriebs mittels der formschlüssigen Kupplung (82) erfolgt und dass im Stillstand des Verbrennungsmotors in kurzen Stoppphasen eine Standklimatisierung mittels Rückwärtsdrehen der Nebenaggregate erfolgt und das Starten des Verbrennungsmotors nach der Stoppphase mittels Umkehr der Drehrichtung der Elektromaschine erfolgt.

8. Verfahren nach Anspruch 7, **dadurch gekennzeichnet, dass** eine beziehungsweise die Boostklinke (52) in einem Standklimabetrieb freilaufmäßig überrollt wird.

9. Verfahren nach Anspruch 7 oder 8, **dadurch gekennzeichnet, dass** die als Riemenstartergenerator nutzbare Elektromaschine umgepolt wird, wenn nach der Stoppphase das Starten des Verbrennungsmotors angefordert wird.

10. Verfahren nach Anspruch 9, **dadurch gekennzeichnet, dass** eine beziehungsweise die Generatorklinke (51) nach dem Starten des Verbrennungsmotors in ihre Sperrstellung umgeschaltet wird.

## Claims

1. Vehicle having an internal combustion engine, having a belt-type starter generator (RSG) and having a decouplable power takeoff for auxiliary assemblies, wherein at least one air-conditioning compressor and one electric machine as belt-type starter generator which can be used as motor and generator are provided as auxiliary assemblies in the power takeoff, wherein the decoupling and coupling-on of the power takeoff are performed by means of a clutch (82), and wherein, when the internal combustion engine is at a standstill in brief stoppage phases, standstill air-conditioning is realized by backward rotation of the auxiliary assemblies, and the starting of the internal combustion engine after the stoppage phase is performed by reversal of the direction of rotation of the electric machine, **characterized in that** the clutch (82) is a positively locking clutch.

2. Vehicle according to Claim 1, **characterized in that** the decoupling and coupling-on of the power takeoff is performed by means of a switchable pawl-type freewheel (81).

3. Vehicle according to Claim 2, **characterized in that** the switchable pawl-type freewheel (81) has a switching device (54) and at least one generator pawl (51) which can be switched by means of the switching device (54) from a blocking position into a freewheel position.

4. Vehicle according to Claim 3, **characterized in that** the switchable pawl-type freewheel (81) comprises a boost pawl (52) which imparts a blocking action in an opposite direction of relative rotation in relation to the generator pawl (51).

5. Vehicle according to one of the preceding claims, **characterized in that** the belt-type starter generator (RSG) is combined with a belt pulley decoupler (44).

6. Vehicle according to Claim 5, **characterized in that** the belt pulley decoupler (44) comprises a torsional vibration damper and/or rotary vibration damper.

7. Method for operating a vehicle according to one of the preceding claims, **characterized in that** the decoupling and coupling-on of the power takeoff is performed by means of the positively locking clutch (82), and **in that**, when the internal combustion engine is at a standstill in brief stoppage phases, standstill air-conditioning is realized by backward rotation of the auxiliary assemblies, and the starting of the internal combustion engine after the stoppage phase is performed by reversal of the direction of rotation of the electric machine.

8. Method according to Claim 7, **characterized in that** a or the boost pawl (52) is overrun, in the manner of a freewheel, during standstill air-conditioning operation.

9. Method according to Claim 7 or 8, **characterized in that** the polarity of the electric machine, which can be utilized as a belt-type starter generator, is reversed when the starting of the internal combustion engine is demanded after the stoppage phase.

10. Method according to Claim 9, **characterized in that** a or the generator pawl (51) is switched into its blocking position after the starting of the internal combustion engine.

## Revendications

1. Véhicule doté d'un moteur à combustion interne, d'un démarreur-générateur à courroie (RSG) et d'une prise de force débrayable pour des dispositifs secondaires, au moins un compresseur de climatisation servant de dispositif secondaire et une machine électrique utilisable comme moteur et générateur servent de démarreur-générateur à courroie étant prévus sur la prise de force,
l'accouplement et le désaccouplement de la prise de force s'effectuant au moyen d'un embrayage (82) et
lorsque le moteur à combustion est à l'arrêt, une climatisation permanente au moyen d'une rotation vers l'arrière des dispositifs secondaires ayant lieu pendant de courtes phases d'arrêt, le démarrage du moteur à combustion interne après la phase d'arrêt s'effectuant par inversion du sens de rotation de la machine électrique,
**caractérisé en ce que**
l'embrayage (82) est un embrayage en correspondance géométrique.

2. Véhicule selon la revendication 1, **caractérisé en ce que** l'accouplement et le désaccouplement de la prise de force s'effectuent au moyen d'un fonctionnement en roue libre (81) à cliquet commutable.

3. Véhicule selon la revendication 2, **caractérisé en ce que** le fonctionnement en roue libre (81) commutable à cliquet comprend un dispositif de commutation (54) et au moins un cliquet (51) de génératrice qui peut être commuté par le dispositif de commutation (54) d'une position de blocage à un fonctionnement en roue libre.

4. Véhicule selon la revendication 3, **caractérisé en ce que** le fonctionnement en roue libre (81) à cliquet commutable comprend un cliquet (52) d'appoint qui bloque une direction de rotation relative opposée à celle du cliquet de génératrice (51).

5. Véhicule selon l'une des revendications précédentes, **caractérisé en ce que** le démarreur-générateur (RFG) à courroie peut être combiné avec un débrayage (44) de poulie de courroie.

6. Véhicule selon la revendication 5, **caractérisé en ce que** le débrayage (44) de poulie de courroie comporte un amortisseur de vibrations en torsion et/ou un amortisseur de vibrations en rotation.

7. Procédé d'utilisation d'un véhicule selon l'une des revendications précédentes, **caractérisé en ce que** l'accouplement et le désaccouplement de la prise de force s'effectuent au moyen de l'embrayage (82) en correspondance géométrique et **en ce que** lorsque le moteur à combustion interne est à l'arrêt, une climatisation permanente au moyen d'une rotation vers l'arrière des dispositifs secondaires a lieu pendant de courtes phases d'arrêt et le démarrage du moteur à combustion interne après la phase d'arrêt s'effectue par inversion du sens de rotation de la machine électrique.

8. Procédé selon la revendication 7, **caractérisé en ce qu'**un cliquet d'appoint (52) ou le cliquet d'appoint est passé en roue libre lorsque l'installation de climatisation permanente est en fonctionnement.

9. Procédé selon les revendications 7 ou 8, **caractérisé en ce que** la machine électrique utilisable comme démarreur-génératrice à courroie a ses pôles inversés si le démarrage du moteur à combustion interne est demandé après la phase d'arrêt.

10. Procédé selon la revendication 9, **caractérisé en ce que** le cliquet de génératrice (51) ou un cliquet de génératrice est commuté en position de blocage après le démarrage du moteur à combustion interne.
